# EUROPEAN PATENT APPLICATION

(11) **EP 0 778 244 A1**
(43) Date of publication of application: **11.06.1997**
(21) Application number: 96307541.1
(22) Date of filing: 17.10.1996
(51) Int. Cl.: C02F 1/56, C02F 1/54, D21H 21/02

(54) **Methods for inhibiting the production of slime in aqueous systems**

(30) Priority: 06.12.1995 US 568070; 03.06.1996 US 657122
(71) Applicant: Betzdearborn Europe, Inc., Trevose PA 19053-6783 (US)
(72) Inventor: Hernandez-Mena, Roy, The Woodlands, TX 77381 (US); Sujdak, Richard J., Yardley, PA 19067 (US); Friend, Patric L., Conroe, TX 77301 (US)
(74) Representative: W.P. Thompson & Co.

(57) **Abstract**

Methods for inhibiting the attachment of microbes to surfaces in aqueous systems are disclosed. Tea extracts, tannins, and/or tannin-containing polymers are added to aqueous systems, such as papermaking and cooling water systems, to inhibit microbial attachment to surfaces which cause slime formation problems.

## Description

### FIELD OF THE INVENTION

The present invention relates to methods for inhibiting the formation of slime by microorganisms in industrial aqueous systems. This method is directed towards inhibiting the attachment of microorganisms to the surfaces of industrial aqueous systems.

### BACKGROUND OF THE INVENTION

Microorganisms and the slimes they produce are responsible for the formation of deposits in papermaking and industrial cooling water systems. Bacterial slimes are composed of exopolysaccharides (EPS) which exist as capsules or slime layers outside of the cell walls. When these slimes form on surfaces in paper or cooling systems, they trap organic and inorganic components and debris present in the process waters. As the microorganisms grow within paper system deposits, portions of the deposit may detach from the surface and cause paper breaks and spots in produced paper, which reduces the paper quality and increases machine downtime. Microbial growth and slime formation in cooling systems results in reduced heat exchange caused by biofouling and plugging of heat exchanger tubes, excessive fouling of the cooling water, tower decks and fill, and is a potential cause of under-deposit corrosion.

The term "slime" is a broad one covering a wide range of viscous, mucous, or leathery materials and mixtures found in industrial waters. Slimes are polymeric in nature and can be broadly classified as chemical, biological, or composite slimes depending upon their cause or composition. For example, raw materials and equipment used in the paper industry are not sterile and water used in conjunction with such equipment is continuously being contaminated with a wide variety of microorganisms from such sources as wood pulp, chemicals, air, makeup water, and the like. The growth of certain specific forms of these biological contaminants causes or produces polymeric excretions or products that are or become slime.

Historically, slime formation has been treated by the addition to industrial waters (e.g., white water associated with the pulp and paper industry) of slimicides. The purpose of these slimicides is to destroy or arrest the growth of some of the many organisms present in the water to thereby prevent or retard the formation of slime. Chemicals used as slimicides have included chlorine, phenylmercuric acetate, pentachlorophenol, tributyl tin oxide, and isothiocyanates, all of which are relatively toxic to humans.

Microbially produced exopolysaccharides can build up, retard heat transfer and restrict water flow through cooling water systems. Controlling slime-forming bacteria by applying toxic chemicals is becoming increasingly unaccepted due to environmental problems. In addition, the efficacy of the toxicants is minimized by the slime itself, since the extracellular polysaccharide surrounding microorganisms impedes toxicant penetration.

Toxicants cannot adequately control large populations of attached bacteria and they are effective mainly against suspended microorganisms. Although surfactants and dispersants which penetrate and help loosen slime can enhance the activity of toxicants, they are nonspecific and may have deleterious effects on the industrial process or the environment.

Recently, methods directed at controlling microbial slimes include the use of enzymes. These approaches attempt to disrupt the attachment process so that slime formation is prevented, or by hydrolyzing the exopolysaccharide (EPS) produced by the microorganisms after attachment. Using an enzyme to control slime will require knowledge of the composition of the slime, so that an appropriate enzyme-substrate combination is employed.

### SUMMARY OF THE INVENTION

The present invention relates to methods for inhibiting the formation of slime in industrial aqueous systems such as papermaking and cooling water systems. The slime formation is inhibited by preventing the attachment of microorganisms to the surfaces of the aqueous systems where the slime-producing bacteria are present. It has been found that the addition of tea extracts, tannins and tannin-containing polymers to these aqueous systems inhibit the attachment of microorganisms, particularly bacteria.

### DESCRIPTION OF THE RELATED ART

"Oolong Tea Polyphenols Inhibit Experimental Dental Caries in SPF Rats Infected with Mutans Streptococci," T. Ooshima et al., Caries Res 27:124-129, 1993, discusses the inhibitory effects of Oolong tea extracts derived from Camellia sinensis on dental caries in specific pathogen-free rats. This study indicated that Oolong tea extracts contain polyphenols and inhibit insoluble glucan synthesis by inhibiting glucosyltransferases (GTases) and the sucrose-dependent cell adherence of Streptococcus mutans.

"Toxicity of Tannic Compounds to Microorganisms", Field et al., Plant Polyphenols, 1992, pp. 673-692 discusses the toxicity of tannins to microorganisms by their hydrogen bonding with proteins. Toda et al. in "The Bactericidal Activity of Tea and Coffee", Letters in Applied Microbiology, 1989, 8, 123-125 demonstrates that extracts of black tea, green tea, pu-erh tea and coffee inhibited the growth and exhibited bactericidal activity against various bacteria.

U.S. Pat. No. 4,760,088 teaches that sulfide derivatives of catechins that are derived from condensed tannins possess biocidal activity. These sulfides which are prepared by reacting condensed tannin with a thiol compound under mild acidic conditions are effective biocides against wood destroying fungi and gram-positive bacteria.

The antifouling properties of phenolic acid sulphates isolated from marine organisms is discussed in "The Antifouling Activity of Natural and Synthetic Phenolic Acid Sulphate Esters," J.S. Todd et al., Phytochem 34(2) 401-404, 1993. This study found that p-(sulphooxy) cinnamic acid, isolated from the seagrass Zostera marina, prevents attachment of marine bacteria and barnacles to artificial surfaces.

U.S. Pat. No. 5,238,572 teaches methods for treating microbial slime in industrial water systems by adding to the water a combination of enzymes specific to the numerous saccharide units that make up the slime forming exopolysaccharide layer. The enzymes comprise galactosidase, galacturonidase, rhamnosidase, xylosidase, fucosidase, arabinosidase, and α-glucosidase.

### DETAILED DESCRIPTION OF THE INVENTION

The present invention provides for methods for inhibiting the attachment of microorganisms to the surfaces of aqueous systems comprising adding to the aqueous system an effective inhibiting amount of a tea extract, a tannin, and/or a tannin-containing polymer.

The tea extract in general is derived from the Camellia genus, Camellia sinensis. Tea is classified into three types depending on the processing of the tea leaves: nonfermented green tea, semifermented tea, and fermented black tea. The teas useful in the methods of the present invention include but are not limited to nonfermented green teas selected from the group consisting of gun powder tea and pan fried green tea; semi-fermented teas selected from the group consisting of Oolong tea, formosa tea, and lotus tea; and fermented black teas selected from the group consisting of orange pekoe tea, assam tea, darjeeling blend, Turkish tea, and Earl Grey tea. These tea types are well known in the art and are widely commercially available.

Tannin, also called tannic acid, occurs naturally in the leaf, branch, bark and fruit of many plants. As disclosed by A. Pizzi in "Condensed Tannin for Adhesives", Ind. Eng. Chem. Prod. Res. Dev. 1982, 21, pages 359-369, the natural tannins can be classified as "hydrolyzable" and "condensed" tannins. The composition and structure of tannin will vary with the source and the method of extraction, but the empirical structure is given as C₇₆H₅₂O₄₆ with many OH groups attached to the aromatic rings. The tannin employed in the present invention is preferably a condensed tannin including but not limited to those tannins derived from Quebracho, Mimosa, and Sumac. The present inventors anticipate that hydrolyzable tannins will also be effective in the present invention.

The present invention further relates to methods for inhibiting the attachment of microorganisms to the surfaces of aqueous systems comprising adding a water soluble or dispersible tannin containing polymer composition comprising a copolymer of a tannin and a cationic monomer. In another embodiment of the invention, the water soluble or dispersible tannin containing polymer composition comprises a polymer of tannin; a cationic monomer and at least one monomer selected from the group consisting of an anionic monomer and a nonionic monomer.

The cationic monomer is preferably selected from a group containing ethylenically unsaturated quaternary ammonium, phosphonium or sulfonium ions. Typical cationic monomers are quaternary ammonium salts of dialkylaminoalkyl(meth)acrylamides, dialkylaminoalkyl(meth)acrylates and diallyl dialkyl ammonium chloride.

The preferred cationic monomers selected from the group include but are not limited to methyl chloride quaternary salt of diethylaminoethyl acrylate, dimethyl sulfate salt of diethylaminoethyl acrylate, dimethylaminoethyl acrylate, dimethylaminoethyl methacrylate, diethylaminoethyl methacrylate, dimethylaminopropyl methacrylamide, dimethylaminopropyl acrylamide, diallyldimethyl ammonium chloride and diallyldiethyl ammonium chloride. The most preferred cationic monomer is methyl chloride quaternary salt of diethylaminoethyl acrylate.

The anionic monomer is preferably selected from the group containing ethylenically unsaturated carboxylic acid or sulfonic acid functional groups. These monomers include but are not limited to acrylic acid, methacrylic acid, vinyl acetic acid, itaconic acid, maleic acid, allylacetic acid, styrene sulfonic acid, 2-acrylamido-2-methyl propane sulfonic acid (AMPS®) and 3-allyloxy-2-hydroxypropane sulfonic acids and salts thereof. The preferred anionic monomer is acrylic acid.

The nonionic monomer is preferably selected from the group of ethylenically unsaturated nonionic monomers which comprise but are not limited to acrylamide, methacrylamide, N-methylolacrylamide, N,N-dimethylacrylamide; lower alkyl (C₁-C₆) esters including vinyl acetate, methyl acrylate, ethyl acrylate, and methyl methacrylate; hydroxylated lower alkyl (C₁-C₆) esters including hydroxyethyl acrylate, hydroxypropyl acrylate and hydroxyethyl methacrylate; allyl glycidyl ether; and ethoxylated allyl ethers of polyethylene glycol, polypropylene glycol and propoxylated acrylates. The preferred nonionic monomers are allyl glycidyl ether and acrylamide.

The resulting tannin containing polymer contains from 10 to 80% by weight of tannin, 20 to 90% by weight of cationic monomer, 0 to 30% by weight of nonionic monomer and 0 to 20% by weight of anionic monomer, provided that the resulting tannin containing polymer is still water soluble or dispersible and the total weight % of cationic, nonionic and anionic monomers and tannin adds up to 100%. Preferably, when the cationic monomer and anionic monomer are present together in the tannin containing polymer, the cationic monomer comprises a greater weight percentage than the anionic monomer.

The preferred copolymer of tannin and cationic monomer contains 20 to 80 weight % of tannin. More preferably, the copolymer contains from 30 to 60 weight % of tannin and most preferably, from 30 to 50 weight % of the tannin in the copolymer, provided the total weight of tannin and cationic monomer totals 100 weight %. More preferably still, the copolymers have a weight % of 30% tannin and 70% cationic monomer and 50% tannin and 50% cationic monomer. These particular copolymers are most preferred when the tannin is a Mimosa type tannin and the cationic monomer is methyl chloride quaternary salt of dimethylaminoethyl acrylate.

The number average molecular weight of the resulting tannin containing polymer is not critical, as it is still water soluble or dispersible. The tannin containing polymers may be prepared by mixing the desired monomers with tannin and initiating by a free radical initiator via solution, precipitation or emulsion polymerization techniques. Conventional initiators such as azo compounds, persulfates, peroxides and redox couples may be used. The preferred initiators are 2,2'azobis(2-amidinopropane) dihydrochloride, available as V-50 from Wako Chemicals and t-butylhydroperoxide/sodium metabisulfite (t-BHP/NaMBS). These or other initiators may be added at the end of polymerization to further react with any residual monomers.

Chain transfer agents such as alcohol, amine, formic acid or mercapto compounds may be used to regulate the molecular weight of the polymer. The resulting polymer may be isolated by well known techniques including precipitation, etc., or the polymer may simply be used in its aqueous solution.

The reaction temperature is not critical and generally occurs between 20° and 100°C, preferably 40° to 70°C. The pH of the reaction mixture is also not critical and is generally in the range of 2.0 to 8.0. The resulting tannin containing polymers are characterized by C-13 NMR, Brookfield viscosity and percent solids.

Synthesis methods and procedures are demonstrated in European Patent Application No. 94304229. 1, the contents of which are wholly incorporated herein by reference.

The tea extracts, tannins, and tannin-containing polymers will inhibit the attachment of microbes to surfaces in industrial aqueous systems. By preventing this attachment, the formation of slimes is inhibited. The methods of the present invention are utilized in aqueous systems where microbial slime causes problems. Systems which are particularly susceptible to slime proliferation are papermaking and cooling water systems where poor paper quality, machine downtime and fouled heat exchangers result from slime formation.

The methods claimed are generally applicable to the control of attachment of microorganisms. These microbes include but are not limited to Pseudomonas, Klebsiella, Aerobacter, Acinetobacter, Enterobacter and Flavobacterium.

The total amount of tea extract, tannin, and/or tannin-containing polymers used in the methods of the present invention is that amount which is sufficient to inhibit attachment of microbes. This amount will vary according to the conditions of the aqueous system and will be determined by the amount of slime already present, the amount of bacteria present in the aqueous system, the type and nature of surface to be treated, and the pH and temperature of the aqueous system.

Preferably, the total amount of tea extract, tannin, and/or tannin-containing polymer added to the aqueous system ranges from 62 to 1000 parts per million parts of the aqueous system. More preferably, the range is from about 62 parts to about 125 parts per million parts of the aqueous system.

The tea extract, tannin and/or tannin-containing polymer is preferably applied to the aqueous phase in contact with the surface experiencing or having the potential to experience microbial fouling. The tea extract, tannin and/or tannin-containing polymer may also be applied directly to the surface experiencing or having the potential to experience microbial fouling.

The tea extract, tannin and/or tannin containing polymer may be applied individually, as mixtures of tea extracts and mixtures of tannins or as mixtures of both. The tea extract, tannin, and/or tannin-containing polymer may be applied neat or as a solution. When a solution is employed, the preferred solvent is water; however, any solvent that is compatible with the tea extract, tannin, and aqueous system to be treated may be employed. The tea extracts, tannins and/or tannin-containing polymers may be added in conjunction with biocides and surfactants as an adjunct for a complete program for microbial control.

The invention will now be further described with reference to a number of specific examples which are to be regarded solely as illustrative and not as restricting the scope of the invention.

### Examples

The microbial culture used in the study of bacterial attachment in the following examples was prepared as follows: to a flask containing 50 mL of Simple Salts Medium (SSM) and 3 g/l of glucose was added 50 µl of a solution containing 10 µCi/mL of ³H-adenine. The SSM (pH=7) contained:

| | |
|---|---|
| 0.79 g | (NH₄)SO₄ |
| 0.06 g | MgSO₄ |
| 1.01 g | KCl |
| 3.81 g | KH₂PO₄ |
| 6.00 g | K₂HPO₄ |
| 3.00 g | glucose |
| 1.0 L | deionized H₂O |

This flask was inoculated with a field isolate identified as Pseudomonas aeruginosa. The microbial culture was grown overnight at 37°C with shaking at 200 rpm. This procedure generated a radio-labeled culture which could be monitored using a scintillation counter.

Following incubation, the culture was centrifuged at 12,000 xg for 15 minutes in a Sorvall (Newtown, CT) RC-5 centrifuge. The supernatant was decanted and the culture was re-suspended in SSM to remove any non-incorporated radio-label: Centrifugation was repeated, the supernatant decanted, and the pellet was re-suspended in five mL of SSM. In a side-arm flask containing SSM (approximately 5 to 10 mL), a 300 Klett Unit suspension was prepared by adding an appropriate amount of the cell suspension to the flask. This suspension contained approximately 10⁹ CFU/mL, and was used in the assay described below.

The assay used to test compounds for anti-sessile activity is microplate-based and uses Dynatech Laboratories, Inc. (Chantilly, VA) Immulon 1 Removawell Strips. Each well in these strips can be removed individually and tested for adhesion of microbes to its surface. In a typical assay, the wells are pre-wetted with 25 µl of SSM for 30 minutes. The test compound is added to six wells of the microplate at a volume per well of 50 µl. This is followed by addition of 50 µl of the radio-labeled cell suspension discussed above. The order of addition can be reversed in order to test whether the compound can remove cells from the surface. Immediately after the final component of the test has been added to the wells, three of the wells are harvested to establish the initial amount of attachment to the polystyrene surface (T=0 hr). Harvesting removes any unattached cells and is accomplished by rinsing the wells with de-ionized water using a Skatron Titertek Cell Harvester (Sterling, VA). The wells are then placed in scintillation vials, covered, and placed in a boiling water bath for 30 minutes in order to lyse the cells and make the radio-label available for counting. After the vials have cooled, five mL of liquid scintillation fluid is added to the vials and the amount of radio-label is counted in a liquid scintillation counter. The remaining wells are placed on a Fisher Vortex Genie 2 (Pittsburgh, PA) (modified to hold a microplate) at a very slow shaking speed. At T=1 hr, the remaining wells are harvested as outlined above. The amount of radio-label is compared with those of wells that were not exposed to any test compound (these are the controls).

The following test utilized 1,000 ppm of Oolong tea extract (final well concentration) added either before or after the addition of the radio-labeled bacteria. The results are presented in Table I.

**TABLE I**

| Attachment of Pseudomonas aeruginosa to plastic microplate wells | | | | |
|---|---|---|---|---|
| **Organisms added first** | | | | |
| | Average CPM | | % Attachment | |
| Time (hours) | 0 | 1 | 0 | 1 |
| Control | 2,674 | 5,049 | --- | --- |
| Oolong tea extract | 1,596 | 2,053 | 60% | 41 % |

| **Chemicals added first** | | | | |
|---|---|---|---|---|
| | Average CPM | | % Attachment | |
| Time (hours) | 0 | 1 | 0 | 1 |
| Control | 2,340 | 3,205 | --- | --- |
| Oolong tea extract | 228 | 72 | 10% | 2% |

As seen in Table I, only 41% of the cells attached to the surface of the wells compared to the control. When the chemical was added first, only 2% of the bacteria in the test wells attached.

The following example tested for the inhibition of bacterial attachment as a function of Oolong tea extract added before and after the addition of the radio-labeled microbes. Incubation time was one hour. These results are presented in Table II.

**TABLE II**

| Attachment of Pseudomonas aeruginosa to plastic microplate wells | |
|---|---|
| **Organisms added first** | |
| Dosage Oolong Tea Extract (ppm) | % Attached |
| 31 | 106 |
| 62 | 68 |
| 125 | 54 |
| 250 | 58 |
| 500 | 60 |
| 1000 | 64 |

| **Chemicals added first** | |
|---|---|
| Dosage Oolong Tea Extract (ppm) | % Attached |
| 31 | 78 |
| 62 | 46 |
| 125 | 14 |
| 250 | 5 |
| 500 | 3 |
| 1000 | 2 |

In the following example, Oolong tea extract, Mimosa tannin and Quebracho tannin were tested for their ability to inhibit the attachment of microbes to surfaces. Incubation time for the assay was one hour. Results are presented in Table III.

**TABLE III**

| Attachment of Pseudomonas aeruginosa to plastic microtiter wells-chemicals added first | |
|---|---|
| Inhibitor (ppm) | % Attached |
| Oolong tea extract ( 62) | 36 |
| (125) | 8 |
| (250) | 1 |
| (500) | 1 |
| Mimosa tannin ( 62) | 20 |
| (125) | 11 |
| (250) | 6 |
| (500) | 3 |
| Quebracho tannin ( 62) | 78 |
| (125) | 56 |
| (250) | 26 |
| ( 500) | 18 |

The following example shows the effect of the inhibitor compounds on the attachment of the test organism when the radio-labeled bacteria are added prior to the addition of the test compounds. The time of the assay was one hour. Test results are shown in Table IV.

**TABLE IV**

| Attachment of Pseudomonas aeruginosa to plastic microtiter wells-microbes added first | |
|---|---|
| Inhibitor (ppm) | % Attached |
| Oolong tea extract ( 62) | 56 |
| (125) | 28 |
| (250) | 33 |
| (500) | 36 |
| Mimosa tannin ( 62) | 61 |
| (125) | 50 |
| (250) | 56 |
| (500) | 50 |
| Quebracho tannin ( 62) | 80 |
| (125) | 40 |
| (250) | 27 |
| ( 500) | 35 |

Additional studies were performed using a variety of tea extracts. Teas were extracted using a 45% v/v ethanol (95%)/H₂O solution. Total volume used depended on amount of tea available for extraction and the absorbency of the tea leaves. Typically, 20 grams of tea were extracted using 200 mL of the ethanol/water solution. Only three of the teas required additional liquid: Formosa, pan fried green, and assam.

All extractions were conducted in beakers with stir bars, covered with watch glasses, and allowed to stir on a magnetic plate for three hours. After extraction, the beakers were covered with parafilm and refrigerated overnight. The liquid from each extraction was recovered by filtration through standard coffee filters. The liquid recovered was frozen and lyophilized overnight.

After drying, the remaining tea extract (now in powder form) was scraped off the sides of the flasks and crushed using mortar and pestle. All powders recovered were placed in amber bottles and stored in a dessicator until used.

In the following example, a number of tea extracts, tested at 500 ppm final well concentration, were added to microplate wells before addition of the radio-labeled bacteria. Results are shown in Table V. The test procedure employed was that used in Examples 1 through 4.

**TABLE V**

| Attachment of Pseudomonas aeruginosa to plastic microtiter wells-chemicals added first | | | |
|---|---|---|---|
| Tea Type | Tea | Average CPM | % Attachment |
| Semi-Fermented | Oolong (1) | 98 | 2 |
| Teas | Oolong (2) | 83 | 2 |
| | Oolong (3) | 122 | 3 |
| | Formosa | 72 | 2 |
| | Lotus^{a} | 114 | 3 |
| | | | |
| Fermented | Assam tea | 160 | 4 |
| Black Teas | Darjeeling blend | 201 | 4 |
| | Earl Grey^{b} | 118 | 3 |
| | | | |
| Green teas | Gun powder | 119 | 3 |
| | Pan fried green tea^{c} | 104 | 2 |
| | Control | 4,492 | 100 |

| | | | |
|---|---|---|---|
| ^{a} contains Oolong and lotus leaves. | | | |
| ^{b} also contains Oil of Bergamot. | | | |
| ^{c} treated with heat. | | | |

As seen in Table V, a variety of different tea extracts controlled the attachment of microbes.

In the following example, a number of tannins from different sources were tested using the same procedures employed in Examples 1-5, at 500 ppm final well concentration. The tannins were added to the test well prior to the radio-labeled bacteria. Test results are shown in Table VI.

**TABLE VI**

| Attachment of Pseudomonas aeruginosa to plastic microtiter wells-chemicals added first | | |
|---|---|---|
| Tannin | Average CPM | % Attachment |
| Wattle (Mimosa) | 500 | 11 |
| Mimosa Abbey color | 513 | 11 |
| Gambier Abbey color | 808 | 18 |
| Quebracho Abbey color | 986 | 22 |
| Sumac Abbey color | 2,897 | 64 |
| Control | 4,492 | 100 |

These results indicated that other tannins also proved effective at inhibiting the attachment of bacteria.

In the following example, Orange Pekoe tea extract was tested for its ability to prevent attachment of the test organism at various concentrations. The testing procedure was similar to that described for Table II. Test results are presented in Table VII.

**TABLE VII**

| Attachment of Pseudomonas aeruginosa to plastic microtiter wells-chemicals added first | | | |
|---|---|---|---|
| Tea | Concentration (ppm) | Average CPM | % Attachment |
| Orange Pekoe Tea | 63 | 252.43 | 11 |
| Extract | 125 | 106.20 | 5 |
| | 250 | 65.30 | 3 |
| | 500 | 72.77 | 3 |
| Control | ---- | 2,322.57 | |

In attempting to determine the mechanism by which the tannins or teas inhibit the attachment process, studies were conducted to determine whether tannins or teas affect the viability of the microbial population. These studies utilized microbial populations obtained from industrial cooling towers. These experiments were conducted in 125 mL Erlenmeyer flasks containing 50 mL of cooling tower water amended with the appropriate amount of test material. The flasks were incubated for periods of four and twenty-four hours. At prescribed times, samples were withdrawn from the test flasks and standard plate counts were performed. In addition to flasks containing either tea extract or tannin, flasks containing a biocide, methylene bis(thio)cyanate (MBT), were run as a reference control for the population. The results of these studies appear in Tables VIII and IX.

**TABLE VIII**

| Standard Toxicant Evaluation Mideastern Aluminum Mill Cooling Tower Sample | | | | | | |
|---|---|---|---|---|---|---|
| | | | CFU/mL | | % Inhibition | |
| Inhibitor | Dosage | T=0 | T=4 hrs | T=24 hrs | T=4 hrs | T=24 hrs |
| | (ppm) | | | | | |
| Control | ------- | 3.00E+05 | 2.47E+06 | 3.56E+07 | | |
| Control | ------- | 4.50E+05 | 1.50E+06 | 2.44E+07 | | |
| Average | ------- | 3.75E+05 | 1.99E+06 | 3.00E+07 | | |
| | | | | | | |
| MBT | 5 | | 0.00E+00 | 0.00E+00 | 100 | 100 |
| | | | | | | |
| Oolong | 500 | | 7.00E+05 | 1.20E+08 | 65 | -300 |
| | 250 | | 1.70E+06 | 3.84E+07 | 14 | -28 |
| | 62.5 | | 9.70E+05 | 3.22E+07 | 51 | -7 |
| | 12.5 | | 4.30E+05 | 3.22E+07 | 78 | -7 |
| | | | | | | |
| Mimosa | 500 | | 1.00E+04 | 7.40E+07 | 99 | -147 |
| | 250 | | 3.20E+05 | 3.06E+07 | 84 | -2 |
| | 62.5 | | 6.80E+05 | 3.42E+07 | 66 | -14 |
| | 12.5 | | 3.68E+06 | 2.80E+07 | -85 | 7 |
| | | | | | | |
| Quebracho | 500 | | 7.60E+05 | 2.16E+07 | 62 | 28 |
| | 250 | | 1.87E+06 | 2.24E+07 | 6 | 25 |
| | 62.5 | | 1.77E+06 | 2.54E+07 | 11 | 15 |
| | 12.5 | | 2.50E+06 | 3.10E+07 | -26 | -3 |
| | | | | | | |
| Sumac | 500 | | 1.43E+06 | 2.40E+07 | 28 | 20 |
| | 250 | | 1.05E+06 | 2.66E+07 | 47 | 11 |
| | 62.5 | | 1.70E+06 | 2.78E+07 | 14 | 7 |
| | 12.5 | | 1.07E+06 | 2.14E+07 | 46 | 29 |
| MBT is methylene bis(thio)cyanate | | | | | | |

**TABLE IX**

| Standard Toxicant Evaluation Southern Manufacturing Company Process Cooling Tower Sample | | | | | | |
|---|---|---|---|---|---|---|
| | | | CFU/mL | | % Inhibition | |
| Inhibitor | Dosage | T=0 | T=4 hrs | T=24 hrs | T=4 hrs | T=24 hrs |
| | (ppm) | | | | | |
| Control | ------- | 8.80E+05 | 5.50E+06 | 2.00E+06 | | |
| Control | ------- | 9.60E+05 | 4.20E+06 | 3.52E+06 | | |
| Average | ------- | 9.20E+05 | 4.85E+06 | 2.76E+06 | | |
| | | | | | | |
| MBT | 5 | | 1.30E+05 | 4.30E+05 | 97 | 84 |
| | | | | | | |
| Oolong | 500 | | 1.10E+06 | 1.42E+07 | 77 | -414 |
| | 250 | | 8.10E+05 | 5.80E+06 | 83 | -110 |
| | 62.5 | | 1.30E+06 | 6.10E+06 | 73 | -121 |
| | 12.5 | | 1.14E+06 | 5.80E+06 | 76 | -110 |
| | | | | | | |
| Mimosa | 500 | | 4.40E+05 | 1.69E+07 | 91 | -505 |
| | 250 | | 8.40E+05 | 6.90E+06 | 83 | -150 |
| | 62.5 | | 1.52E+06 | 3.40E+06 | 69 | -23 |
| | 12.5 | | 4.90E+06 | 6.20E+06 | -1 | -125 |
| | | | | | | |
| Quebracho | 500 | | 8.10E+06 | 1.17E+07 | -67 | -324 |
| | 250 | | 7.30E+06 | 7.00E+06 | -51 | -154 |
| | 62.5 | | 5.00E+06 | 6.50E+06 | -3 | -136 |
| | 12.5 | | 3.30E+06 | 5.10E+06 | 32 | -85 |
| | | | | | | |
| Sumac | 500 | | 2.15E+06 | 3.60E+07 | 56 | -1204 |
| | 250 | | 7.90E+06 | 2.90E+06 | -63 | -5 |
| | 62.5 | | 3.20E+06 | 9.60E+06 | 34 | -248 |
| | 12.5 | | 5.30E+06 | 6.80A+06 | -9 | -146 |
| MBT is methylene bis(thio)cyanate | | | | | | |

Initial results (T=4 Hrs) of the testing presented in Tables VIII and IX suggest that mimosa and oolong both inhibited the growth of the test cultures. The 24 hour data however indicated no microbial inhibition. These data also show enhanced growth at 24 hours compared to the control.

Further studies were conducted to establish that inhibition of attachment was not due to microbial growth inhibition. In these studies inhibition of microbial growth is monitored by measuring the inhibition of uptake of ¹⁴C-glucose by a microbial culture when that culture was exposed to biocidal compounds. The assay employed used an overnight culture of Pseudomonas aeruginosa or Klebsiella pneumoniae grown in Trypticase Glucose Broth. These cultures were harvested by centrifugation and re-suspended to a optical density of 300 Klett Units. This suspension was placed in microtiter wells containing the test solution, and ¹⁴C-glucose. The culture was allowed to incubate for two hours and the cells were harvested. The uptake of ¹⁴C-glucose by the treated cells was compared to controls with no treatment. MBT was also used as a reference control and to establish the degree to which the culture was inhibited by a biocidal compound. The results of these studies appear in Tables X and XI.

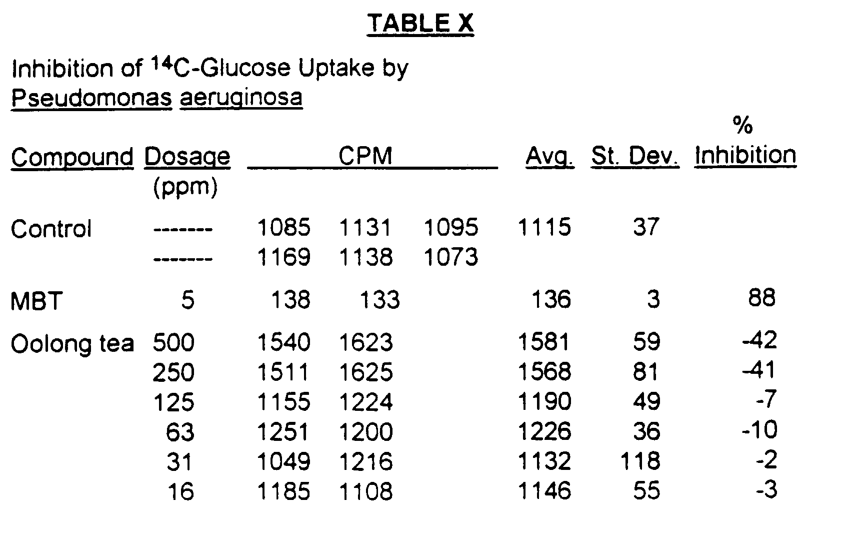

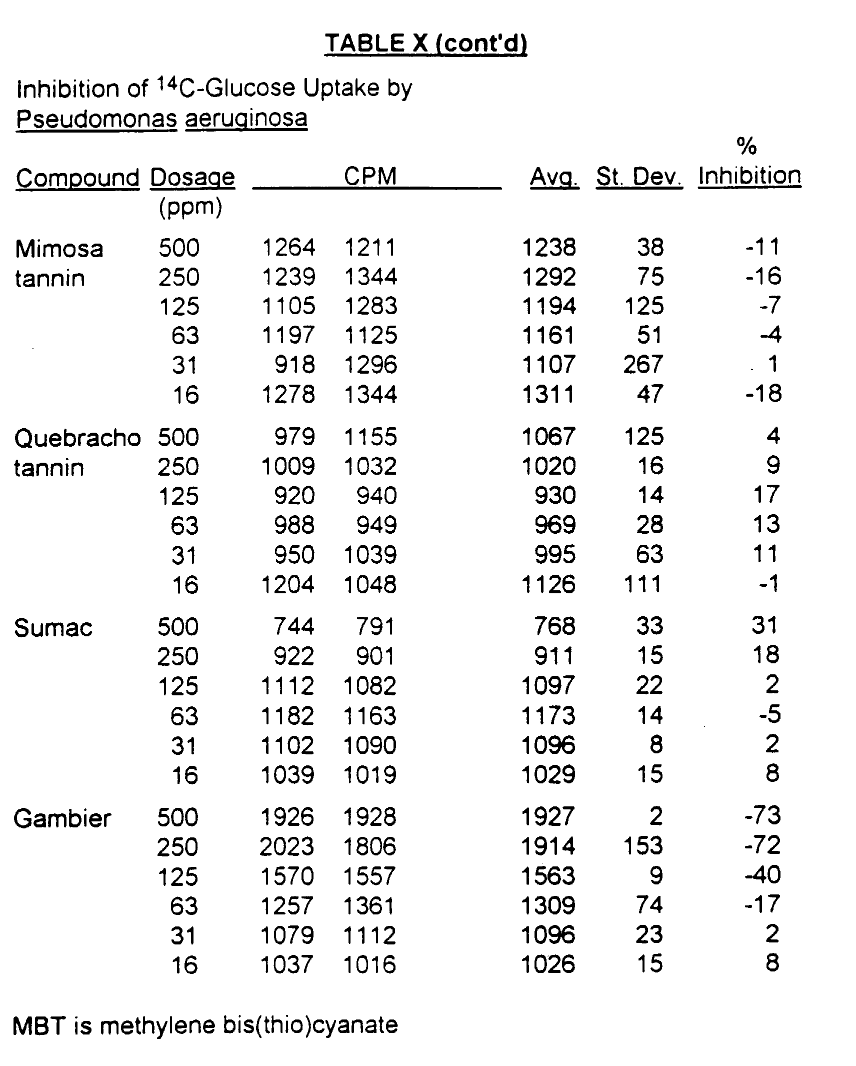

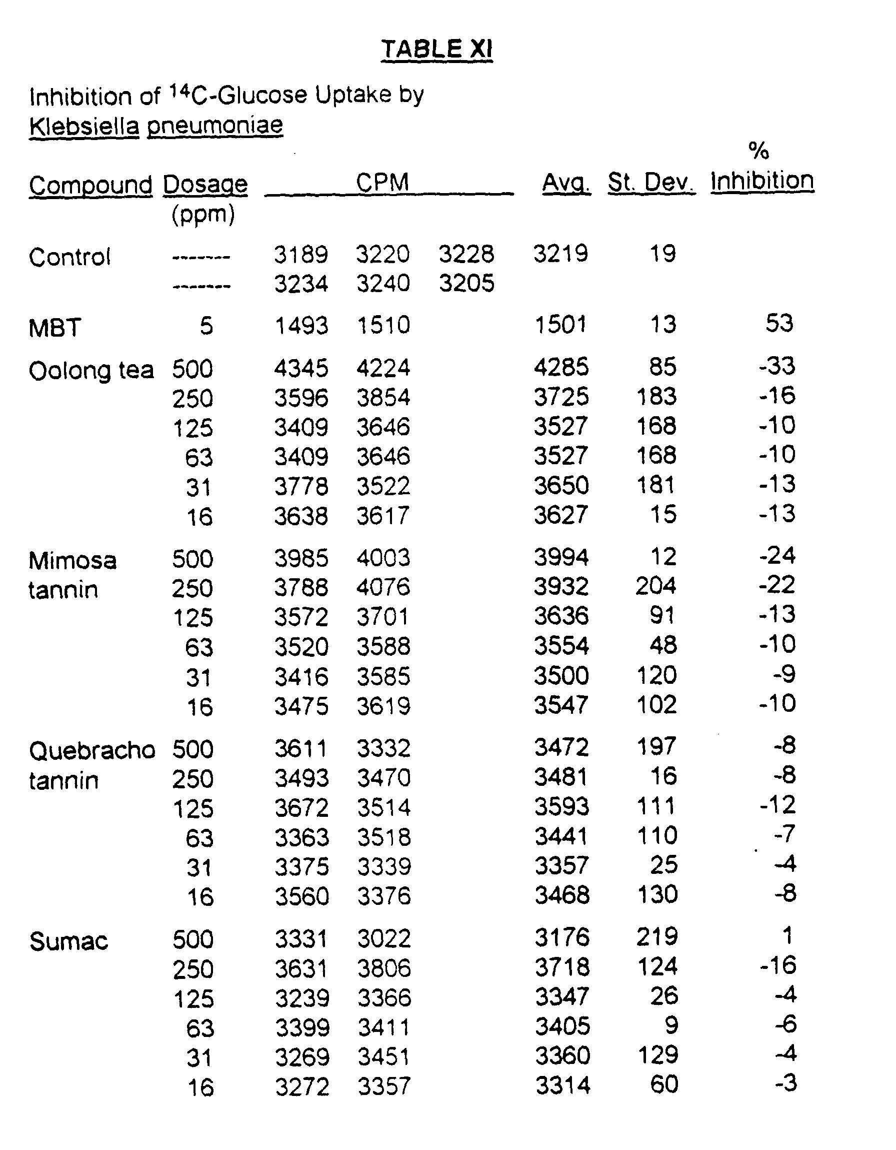

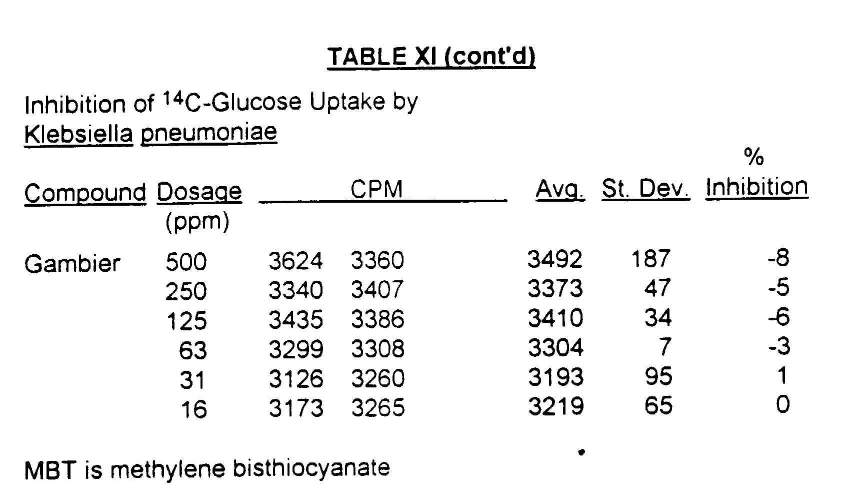

These data suggest enhancement of ¹⁴C-glucose utilization, not growth inhibition. It is evident that the mechanism by which teas and tannin inhibit the attachment of microbes to surfaces is not due to microbial growth inhibition.

Additional studies were conducted to determine whether all tea preparations inhibit microbial attachment. Four teas, processed for different consumer use, were purchased at a local grocery store. These preparations included regular orange pekoe tea purchased as tea bags, decaffeinated orange pekoe tea as tea bags, regular orange pekoe tea prepared as an instant tea, and decaffeinated orange pekoe tea prepared as an instant tea. Those teas purchased in tea bags were extracted as described earlier. The instant teas were tested as purchased. Table XII shows the results obtained.

**TABLE XII**

| Attachment of Pseudomonas aeruginosa to plastic microtiter wells-tea added first | | | | | | | |
|---|---|---|---|---|---|---|---|
| Treatment | Dosage | CPM | | | Avg. | St. Dev. | % Attachment |
| | (ppm) | | | | | | |
| Control | -------- | 3341 | 3239 | 3605 | 3343 | 174 | |
| Control | ------- | 3387 | 3086 | 3402 | | | |
| | | | | | | | |
| A | 500 | 2359 | 2129 | 2213 | 2234 | 116 | 67 |
| | 250 | 2729 | 2912 | 2784 | 2808 | 94 | 84 |
| | 125 | 2863 | 2818 | 2728 | 2803 | 68 | 84 |
| | 62.5 | 3176 | 2872 | 3092 | 3047 | 157 | 91 |
| | | | | | | | |
| B | 500 | 2453 | 2501 | 2745 | 2566 | 157 | 77 |
| | 250 | 2801 | 2714 | 2654 | 2723 | 74 | 81 |
| | 125 | 2874 | 2867 | 2878 | 2873 | 6 | 86 |
| | 62.5 | 2871 | 2645 | 3092 | 2869 | 223 | 86 |
| | | | | | | | |
| C | 500 | 266 | 261 | 410 | 312 | 85 | 9 |
| | 250 | 522 | 417 | 486 | 475 | 54 | 14 |
| | 125 | 718 | 739 | 788 | 748 | 36 | 22 |
| | 62.5 | 1703 | 1363 | 1524 | 1530 | 170 | 46 |
| | | | | | | | |
| D | 500 | 155 | 145 | 121 | 140 | 18 | 4 |
| | 250 | 400 | 364 | 351 | 372 | 25 | 11 |
| | 125 | 708 | 648 | 595 | 650 | 57 | 19 |
| | 62.5 | 1497 | 1416 | 1567 | 1493 | 76 | 45 |
| A is Lipton® Instant Tea B is Lipton® Instant Decaffeinated Tea C is Lipton® Orange Pekoe Tea Extract D is Lipton® Decaffeinated Orange Pekoe Tea Extract | | | | | | | |

These results demonstrate that the process of making decaffeinated tea does not interfere with the inhibitory action of tea extracts. As seen in Treatment D, decaffeinated orange pekoe tea extract still displays inhibitory action similar to the orange pekoe tea extract. These results further demonstrate that the process of rendering a tea "instant" does interfere with the inhibitory action of the tea extract. This is demonstrated by both instant and decaffeinated instant teas in Treatments A and B.

In order to determine whether other plant materials contain the substances with ability to inhibit the attachment of microbes to surfaces, an unrelated plant material was obtained. In this study iceberg lettuce was purchased, dried, extracted (using 45% ethanol by the techniques described previously), and freeze-dried. The lettuce extract was tested using the attachment assay described previously. The results of this study appear in Table XIII.

**TABLE XIII**

| Attachment of Pseudomonas aeruginosa to plastic microtiter wells iceberg lettuce extract | | | | | | | |
|---|---|---|---|---|---|---|---|
| -organisms added first | | | | | | | |
| Treatment | Dosage | CPM | | | Avg. | St. Dev. | % Attachment |
| | (ppm) | | | | | | |
| Control | ------- | 4205 | 4228 | 4134 | 4124 | 131 | |
| Control | ------- | 3996 | 4327 | 4034 | | | |

| Iceberg Lettuce | | | | | | | |
|---|---|---|---|---|---|---|---|
| Extract | 500 | 3635 | 3717 | 3502 | 3618 | 109 | 88 |
| | 250 | 3631 | 3535 | 3987 | 3718 | 238 | 90 |
| | 125 | 3848 | 3868 | 3541 | 3753 | 183 | 91 |
| | 62.5 | 3344 | 3804 | 3902 | 3683 | 298 | 89 |

| -chemicals added first | | | | | | | |
|---|---|---|---|---|---|---|---|
| Control | ------- | 4720 | 4739 | 4787 | 4695 | 172 | |
| Control | ------- | 4773 | 4802 | 4350 | | | |

| Iceberg Lettuce | | | | | | | |
|---|---|---|---|---|---|---|---|
| Extract | 500 | 3990 | 4108 | 4189 | 4096 | 100 | 87 |
| | 250 | 4244 | 4260 | 4392 | 4315 | 69 | 92 |
| | 125 | 4309 | 4076 | 4297 | 4227 | 131 | 90 |
| | 62.5 | 4039 | 4076 | 4262 | 4126 | 119 | 88 |

These results demonstrate that a different plant material that is lower in tannin concentration is not effective at inhibiting the attachment of bacteria.

Further studies were conducted using materials identified as components of teas and/or tannins which were readily available from commercial chemical sources. These compounds were tested and the results of these studies appear in Table XIV.

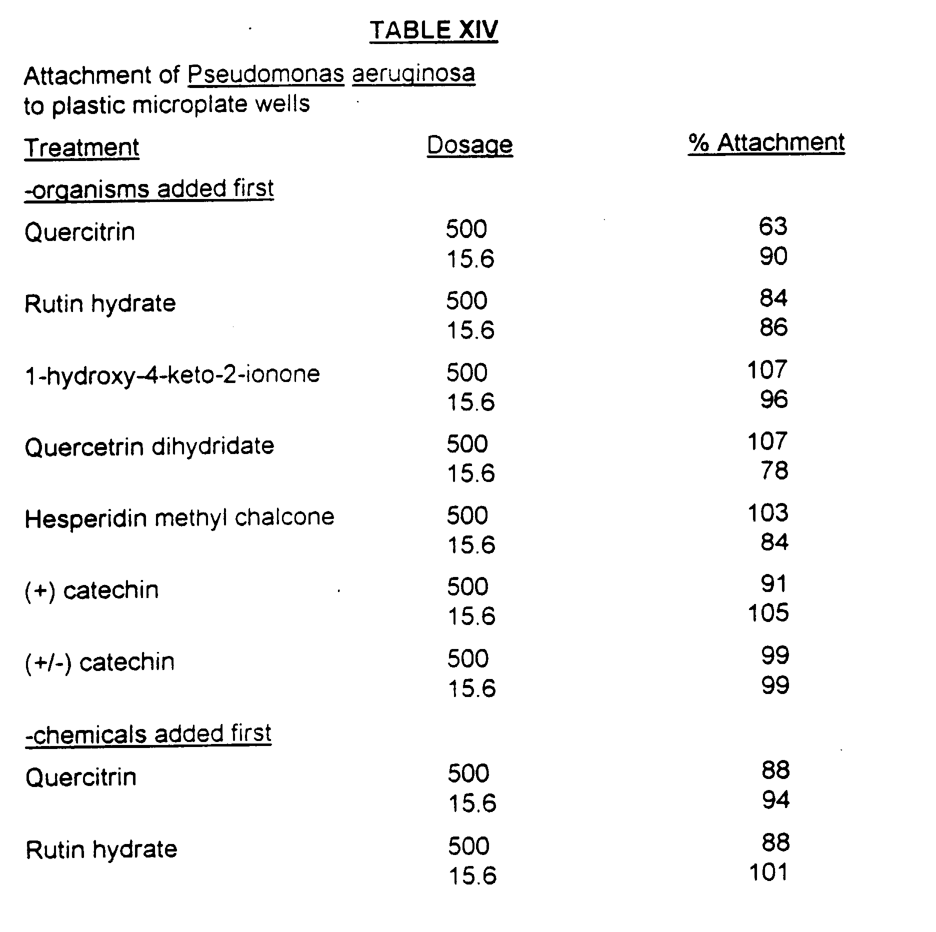

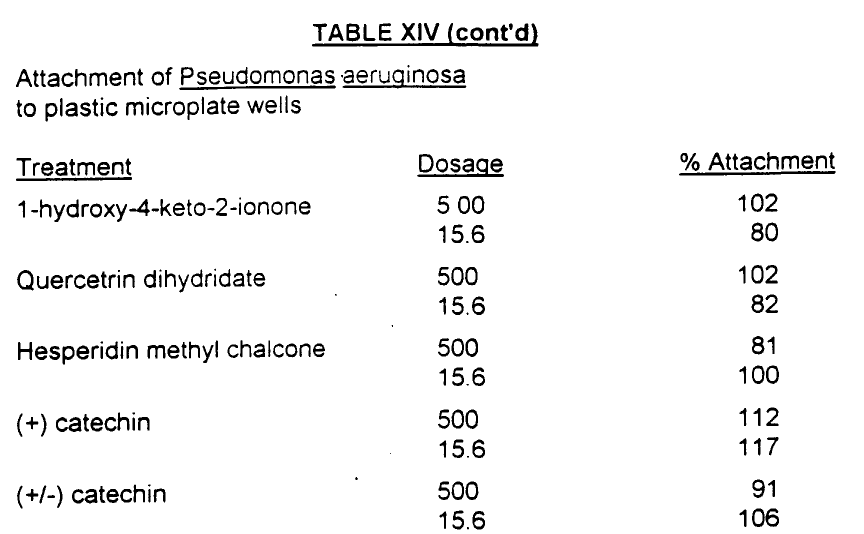

Table XIV demonstrates that these compounds, some known to be biocidal and bactericidal materials, are not effective at inhibiting the attachment of Pseudomonas aeruginosa. This also demonstrates that a compound that displays biocidal behavior is not necessarily effective at inhibiting attachment of microbes.

Caffeine, a known component of tea, was also tested to determine whether it was effective at inhibiting microbial attachment. The results of this study appear in Table XV.

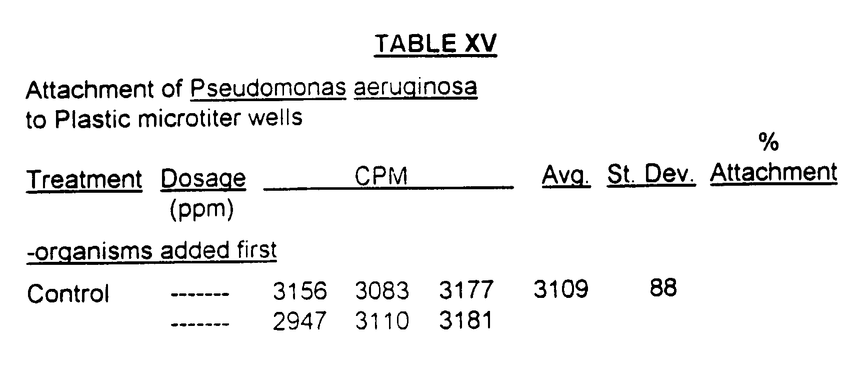

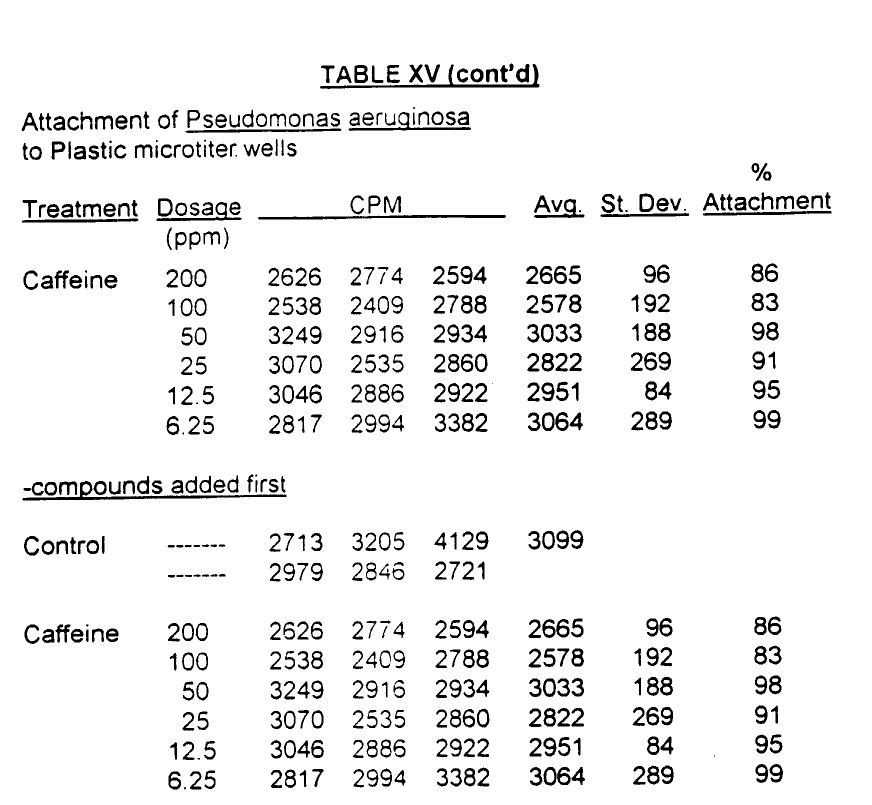

These results demonstrate that caffeine does not inhibit the attachment of Pseudomonas aeruginosa It can be postulated from these results that the caffeine that may be present in commercially available tea does not contribute to the tea extracts' ability to inhibit the attachment of microbes.

In the following example, various copolymers of tannin and cationic monomer were tested for their ability to inhibit the attachment of microbes to surfaces. Incubation time for the assay was one hour. The results of this testing are presented in Table XVI.

**TABLE XVI**

| Attachment of Pseudomonas aeruginosa to plastic microtiter wells-chemicals added first | | | | | | |
|---|---|---|---|---|---|---|
| Inhibitor (ppm) | CPM | | | Avg.CPM | St.Dev. | % Attached |
| Control | 6361 | 6416 | 6366 | | | |
| Control | 6385 | 6708 | 6296 | 6422 | 145 | |
| A ( 62) | 6554 | 6781 | 6592 | 6642 | 121 | 103 |
| A(125) | 6023 | 5686 | 5342 | 5684 | 340 | 88 |
| A (250) | 3831 | 3501 | 4003 | 3778 | 255 | 59 |
| A(500) | 4780 | 4338 | 3620 | 4246 | 586 | 66 |
| B(62) | 7095 | 6771 | 6860 | 6909 | 168 | 108 |
| B(125) | 6326 | 6476 | 5997 | 6266 | 245 | 98 |
| B(250) | 5869 | 5709 | 5966 | 5848 | 130 | 91 |
| B(500) | 6012 | 5445 | 5258 | 5572 | 393 | 87 |
| C( 62) | 6268 | 6676 | 6148 | 6364 | 277 | 99 |
| C(125) | 6102 | 6937 | 7041 | 6693 | 515 | 104 |
| C(250) | 6328 | 6079 | 5971 | 6126 | 183 | 95 |
| C(500) | 4905 | 5866 | 5532 | 5434 | 488 | 85 |
| A is 50% tannin and 50% methyl chloride quaternary salt of diethylaminoethyl acrylate (AETAC), by weight B is 30% tannin and 70% AETAC, by weight C is 40% tannin and 60% AETAC, by weight | | | | | | |

The following example shows the effect of the inhibitor compounds on the attachment of the test organism when the radio-labeled bacteria are added prior to the addition of the test compounds. The time of the assay was one hour. Test results are shown in Table XVII.

**TABLE XVII**

| Attachment of Pseudomonas aeruginosa to plastic microtiter wells-microbes added first | | | | | | |
|---|---|---|---|---|---|---|
| Inhibitor (ppm) | CPM | | | Avg.CPM | St.Dev. | % Attached |
| Control | 8030 | 7832 | 7318 | | | |
| Control | 8002 | 7633 | 7811 | 7771 | 265 | |
| A ( 62) | 8004 | 7214 | 7553 | 7590 | 397 | 98 |
| A(125) | 6808 | 6511 | 6942 | 6754 | 221 | 87 |
| A (250) | 5844 | 6202 | 6215 | 6087 | 211 | 78 |
| A(500) | 5645 | 6186 | 5774 | 5868 | 283 | 76 |
| B(62) | 8028 | 8167 | 7439 | 7878 | 387 | 101 |
| B(125) | 8120 | 7842 | 8302 | 8088 | 232 | 104 |
| B(250) | 7526 | 7970 | 7834 | 7777 | 228 | 100 |
| B(500) | 7149 | 7344 | 7076 | 7190 | 138 | 93 |
| C( 62) | 7845 | 7527 | 7295 | 7556 | 276 | 97 |
| C(125) | 7309 | 7004 | 7859 | 7391 | 433 | 95 |
| C(250) | 6891 | 7061 | 7284 | 7079 | 197 | 91 |
| C(500) | 6268 | 6195 | 6970 | 6478 | 428 | 83 |
| A is 50% tannin and 50% AETAC, by weight B is 30% tannin and 70% AETAC, by weight C is 40% tannin and 60% AETAC, by weight | | | | | | |

As demonstrated in Tables XVI and XVII the inventive copolymers were effective at inhibiting attachment when either the chemicals or the microbes are added first.

While this invention has been described with respect to particular embodiments thereof, it is apparent that numerous other forms and modifications of this invention will be obvious to those skilled in the art. The appended claims and this invention generally should be construed to cover all such obvious forms and modifications which are within the scope of the present invention.

## Claims

1. A method for inhibiting the attachment of microbes to the surfaces of aqueous systems comprising adding to said aqueous systems an effective inhibiting amount of a compound selected from the group consisting of a tea extract, a tannin, and a water soluble copolymer of a tannin and a cationic monomer.

2. A method as claimed in claim 1, wherein said tea extract is selected from the group consisting of non-fermented green tea, semi-fermented tea and fermented black tea.

3. A method as claimed in claim 2, wherein said tea is selected from the group consisting of gun powder tea, pan fried green tea, Oolong tea, formosa tea, lotus tea, orange pekoe tea, assam tea, darjeeling blend, Turkish tea and Earl Grey tea.

4. A method as claimed in any one of the preceding claims, wherein said tannin is selected from the group consisting of Quebracho, Mimosa and Gambier.

5. A method as claimed in any one of the preceding claims, wherein said cationic monomer is selected from the group consisting of methyl chloride or dimethyl sulfate quaternary salt of dimethylaminoethyl methacrylate, diethylaminoethyl methacrylate, dimethyl aminopropyl methacrylamide, dimethylaminopropyl acrylamide, and diallyl dimethyl ammonium chloride.

6. A method as claimed in any one of the preceding claims, wherein said tannin is a condensed tannin.

7. A method as claimed in any one of the preceding claims, wherein said copolymer contains 20 to 80 weight percent of tannin.

8. A method as claimed in any one of the preceding claims, wherein said copolymer further comprises a monomer selected from the group consisting of an anionic monomer and a nonionic monomer.

9. A method as claimed in claim 13, wherein said anionic monomer is acrylic acid, and said nonionic monomer is selected from the group consisting of acrylamide and allyl glycidyl ether.

10. A method as claimed in any one of the preceding claims, wherein said microbes are bacteria.

11. A method as claimed in claim 10, wherein said bacteria is selected from the group consisting of Pseudomonas aeruginosa and Klebsiella pneumoniae.

12. A method as claimed in any one of the preceding claims, wherein said compound is added to said aqueous system in an amount ranging from about 62 parts to about 1000 parts per million parts by the aqueous system.

13. A method as claimed in any one of the preceding claims, wherein said aqueous system is selected from the group consisting of a papermaking system and a cooling water system.
